# FASCICULE DE BREVET EUROPEEN

(11) **EP 3 635 256 B1**
(45) Date de publication et mention de la délivrance du brevet: **18.08.2021**
(21) Numéro de dépôt: 18728530.9
(22) Date de dépôt: 15.05.2018
(51) Int. Cl.: F04C 23/00, F04C 25/02, F04C 28/08, F04C 18/12, F04C 28/28, G05B 23/02

(54) **PROCÉDÉ DE SURVEILLANCE D'UN ÉTAT DE FONCTIONNEMENT D'UN DISPOSITIF DE POMPAGE**
VERFAHREN ZUR ÜBERWACHUNG EINES BETRIEBSZUSTANDES EINER PUMPVORRICHTUNG
METHOD FOR MONITORING AN OPERATING STATE OF A PUMPING DEVICE

(30) Priorité: 06.06.2017 FR 1754979
(43) Date de publication de la demande: 15.04.2020
(73) Titulaire: Pfeiffer Vacuum, 74000 Annecy (FR)
(72) Inventeur: BRANDOLIN, Serge, 74150 Boussy (FR)
(74) Mandataire: Croonenbroek, Thomas Jakob
(86) Numéro de dépôt international: PCT/EP2018/062606
(87) Numéro de publication internationale: WO 2018/224253

(56) Documents cités:
- WO-A1-2004/011810
- WO-A1-2006/051260
- WO-A1-2006/082366
- FR-A1- 2 947 309
- JP-A- 2001 012 379
- US-A- 6 056 510
- US-A1- 2004 064 212
- US-A1- 2013 164 147

## Description

La présente invention se rapporte à un procédé de surveillance d'un état de fonctionnement d'un dispositif de pompage raccordé à une chambre de procédés en vue de déterminer un état de fonctionnement défaillant du dispositif de pompage. L'invention concerne également un dispositif de pompage et une installation mettant en œuvre ledit procédé.

Les pompes à vide comportent deux rotors entraînés par un moteur pour tourner dans le corps de pompe (stator). Lors de la rotation, le gaz aspiré de la chambre de procédés est emprisonné dans l'espace libre compris entre le rotor et le stator, pour être refoulé vers la sortie.

Les pompes à vide sont notamment employées dans les procédés de fabrication de semi-conducteurs, d'écrans plats ou de substrats photovoltaïques, nécessitant une pression inférieure à la pression atmosphérique. Or, les gaz mis en œuvre dans ces procédés peuvent se transformer en sous-produits solides qui peuvent se déposer sous la forme d'une couche sur les pièces mobiles et statiques de la pompe, et conduire au colmatage puis au grippage de la pompe par blocage du mécanisme dû à un frottement excessif du rotor avec le stator.

Le grippage de la pompe peut entraîner des dommages irrémédiables au niveau du produit en cours de fabrication dans la chambre de procédés associée (par exemple des lots de plaquettes de semi-conducteur). Les coûts induits par ces interruptions non programmées de la production sont considérables.

Aujourd'hui la maintenance des pompes à vide est basée à la fois sur des actions correctives et préventives, la meilleure situation étant de pouvoir prédire une maintenance préventive avant que la pompe à vide ne tombe en panne et ne s'arrête.

Pour cela, des opérations de maintenance préventive sont effectuées selon une périodicité définie en fonction de l'application pour laquelle est utilisée la pompe à vide. Cependant la périodicité n'est pas adaptée aux conditions réelles d'utilisation de la pompe qui peuvent varier en fonction de la charge de production et qui peuvent impacter directement la vitesse d'usure ou de colmatage de la pompe, engendrant des opérations inutiles ou bien trop tardives.

Des procédés de prédiction de défaillance de pompe à vide ont été développés pour essayer de prédire la survenue du grippage de la pompe et anticiper son remplacement.

Le document EP0828332 par exemple propose de surveiller les performances d'une pompe à vide pendant son utilisation pour prédire ses caractéristiques de fonctionnement futures en mesurant le couple de rotation ou le courant du moteur. Cette méthode est néanmoins complexe à mettre en œuvre. En effet, il n'est pas possible de mesurer directement le couple de rotation du moteur car les capteurs de couple sont bien trop volumineux. En outre, la mesure du courant moteur varie en fonction d'une multitude de situations indépendantes d'une éventuelle défaillance de la pompe à vide. De cela résulte la nécessité de croiser cette information avec d'autres mesures réalisées sur la ligne de vide ou sur la pompe à vide pour mieux pouvoir les interpréter et ne pas provoquer de maintenances préventives intempestives.

On connaît également un procédé de prédiction de défaillance permettant la détermination du délai dans lequel survient une défaillance sur une pompe à vide sèche. L'estimation de la durée d'utilisation de la pompe à vide avant la survenue d'une défaillance s'effectue par exploitation statistique des données caractéristiques de la pompe (courant, température, vibrations, ...) combinées aux caractéristiques du procédé de fabrication (flux de gaz, pression, température du substrat, ...). Toutefois, ce procédé n'est pas autonome. Il ne peut pas prédire la durée de vie de la pompe sans tenir compte des conditions opératoires du procédé. Le système d'analyse dépend d'informations fournies par l'équipement de production nécessitant l'installation d'une ligne de communication entre l'équipement et la pompe à vide. De plus, une modification des conditions de procédé nécessite alors la modification du modèle du système d'analyse, ce qui ne peut pas être réalisé simplement en cours d'utilisation des pompes à vide.

On connaît également du document EP 1 754 888, un procédé de prédiction de défaillance d'une ligne de vide. Dans ce procédé, l'évolution temporelle d'un premier paramètre fonctionnel relatif au moteur de la pompe et d'un deuxième paramètre fonctionnel relatif au système d'évacuation des gaz de la pompe sont mesurés. Les paramètres fonctionnels mesurés sont ensuite corrélés par un traitement statistique de manière à prédire la durée d'utilisation de la pompe à vide avant la survenue d'un colmatage. La ligne de vide est ainsi capable de réaliser un autodiagnostic sans corrélation avec des signaux extérieurs. Cette méthode est particulièrement bien adaptée au suivi de la progression du phénomène de pollution par des produits solides dans la ligne de vide conduisant au colmatage de la pompe. WO 2006/051260 décrit un système de pompage comprenant un arrangement de pompes à vide à vitesse variable. FR2947309 divulgue un procédé de prédiction d'une défaillance d'un dispositif de pompage selon l'art antérieur.

Bien que certains procédés de prédiction développés permettent de résoudre ces problèmes, on cherche à développer des méthodes de prédiction de défaillance plus simples à mettre en œuvre, peu couteuses, notamment en évitant la multiplication de paramètres d'entrée à traiter ou en évitant l'implémentation de nouveaux capteurs.

Le problème est donc de déterminer un état de fonctionnement défaillant de la pompe à vide afin de protéger la chambre de procédés avant que la pompe ne tombe en panne, sans aucune indication du procédé de traitement ayant lieu dans la chambre de procédés et sans connaissance des conditions d'utilisation de la pompe à vide, au moyen d'une méthode fiable et simple à mettre en œuvre.

A cet effet, l'invention a pour objet un procédé de surveillance d'un état de fonctionnement d'un dispositif de pompage raccordé à une chambre de procédés en vue de déterminer un état de fonctionnement défaillant du dispositif de pompage selon les termes de la première revendication.

Dans le cas d'un colmatage progressif de la pompe à vide primaire que l'on cherche à diagnostiquer, la charge de la pompe à vide primaire est fluctuante. De fait, la fréquence diminue et remonte alternativement sans passer au-dessous de seuils d'alerte ou d'alarme du dispositif de pompage. Le variateur de vitesse peut alors rattraper d'éventuelles baisses de fréquence provoquées par des surintensités sur des durées de l'ordre de quelques secondes ou quelques minutes. Le procédé de surveillance permet de détecter ces situations pour prédire, dans un délai de quelques secondes, voire quelques minutes, l'arrêt brutal du dispositif de pompage, ce qui laisse le temps d'isoler le dispositif de pompage de la chambre de procédés située en amont et de couper l'arrivée des gaz dans la chambre de procédés.

Selon une ou plusieurs caractéristiques dudit procédé de surveillance, prise seule ou en combinaison :
on détermine un état de fonctionnement défaillant lorsqu'en fonctionnement stationnaire, la différence entre le premier paramètre d'entrée et le paramètre de sortie est égale à, ou dépasse 4% du premier paramètre d'entrée, pendant la durée prédéterminée,
la durée prédéterminée est supérieure à 10 secondes,
la durée prédéterminée est inférieure à 30 secondes,
au démarrage de la pompe à vide primaire, le variateur de vitesse est commandé pour augmenter progressivement la fréquence de commande jusqu'à atteindre la fréquence de consigne,
en fonctionnement stationnaire, la fréquence de consigne est constante au moins pendant une durée supérieure ou égale à la durée prédéterminée,
lorsque la fréquence de commande augmente et que le courant moteur dépasse un seuil de courant d'accélération, le variateur de vitesse bloque la montée de la fréquence de commande,
lorsque le variateur de vitesse est en fonctionnement stationnaire et que le courant moteur dépasse un seuil de courant de fonctionnement, le variateur de vitesse diminue la fréquence de commande,
lorsque la différence entre le premier paramètre d'entrée et le paramètre de sortie est égale à, ou dépasse 90% du premier paramètre d'entrée, pendant une durée prédéterminée supérieure à une minute, une alerte ou une alarme est déclenchée.

L'invention a aussi pour objet un dispositif de pompage comportant au moins une pompe à vide primaire comportant :
un moteur d'entrainement de la pompe à vide primaire, et
un variateur de vitesse configuré pour contrôler la vitesse de rotation du moteur et configuré d'une part, pour recevoir un premier paramètre d'entrée correspondant à une fréquence de consigne et un second paramètre d'entrée correspondant à un courant moteur et d'autre part, pour délivrer au moteur un paramètre de sortie correspondant à une fréquence de commande,
caractérisé en ce que le dispositif de pompage comporte une unité de surveillance configurée pour surveiller un état de fonctionnement d'un dispositif de pompage selon un procédé de surveillance tel que décrit précédemment.

Le dispositif de pompage peut comporter une pompe à vide secondaire Roots montée en série et en amont de la pompe à vide primaire.

L'invention a aussi pour objet une installation comportant une chambre de procédés reliée par une canalisation à l'aspiration d'un dispositif de pompage tel que décrit précédemment.

D'autres avantages et caractéristiques apparaîtront à la lecture de la description suivante d'un mode de réalisation particulier de l'invention, mais nullement limitatif, ainsi que des dessins annexés sur lesquels :
- la figure 1 représente une vue schématique d'une installation comprenant une chambre de procédés reliée à un dispositif de pompage,
- la figure 2 montre une vue schématique du dispositif de pompage de la figure 1,
- la figure 3 montre une vue schématique d'éléments d'une pompe à vide primaire du dispositif de pompage de la figure 2,
- la figure 4 montre une vue schématique d'éléments du dispositif de pompage de la figure 2,
- la figure 5 montre un exemple de graphique du courant moteur en fonction du temps, mis en correspondance avec l'évolution temporelle de la fréquence de commande d'un variateur de vitesse du dispositif de pompage au cours d'une phase de démarrage et au cours d'un fonctionnement stationnaire, et
- la figure 6 est un graphique montrant un exemple d'évolution de la fréquence de commande du variateur de vitesse en fonctionnement stationnaire avec la survenue d'une défaillance du dispositif de pompage.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On définit par pompe à vide primaire, une pompe à vide volumétrique, qui, à l'aide de deux rotors aspire, transfère puis refoule le gaz à pomper à la pression atmosphérique. Les rotors sont portés par deux arbres entrainés en rotation par un moteur de la pompe à vide primaire.

On définit par pompe à vide secondaire Roots (également appelé « Roots Blower » en anglais), une pompe à vide volumétrique, qui, à l'aide de rotors de type Roots aspire, transfère puis refoule le gaz à pomper. Une pompe à vide secondaire est montée en amont et en série d'une pompe à vide primaire. Les rotors sont portés par deux arbres entrainés en rotation par un moteur de la pompe à vide secondaire Roots.

On entend par « en amont », un élément qui est placé avant un autre par rapport au sens de circulation du gaz. A contrario, on entend par « en aval », un élément placé après un autre par rapport au sens de circulation du gaz à pomper, l'élément situé en amont étant à une pression plus basse que l'élément situé en aval.

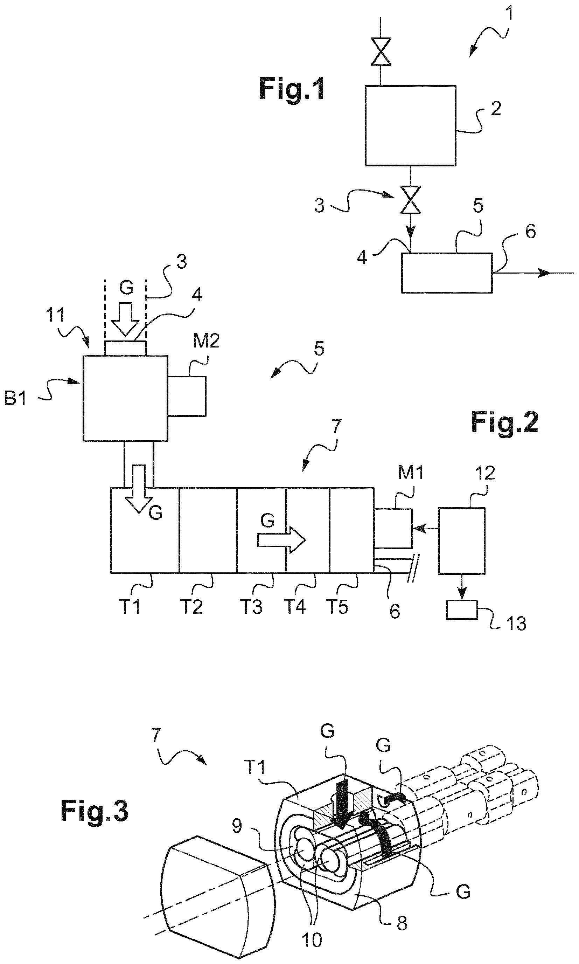

L'installation 1 représentée sur la figure 1 comporte une chambre de procédés 2 reliée par une canalisation 3 à l'aspiration 4 d'un dispositif de pompage 5 pour le pompage des gaz issus de la chambre 2, dans le sens d'écoulement représenté par les flèches. Il peut s'agir d'une chambre 2 dans laquelle a lieu n'importe quel procédé de traitement, par exemple des procédés de dépôts, gravure, implantation ionique ou traitement thermique utilisés dans la fabrication de dispositifs microélectronique sur des plaquettes de silicium ou encore des procédés de fabrication d'écrans plats ou de substrats photovoltaïques.

Le dispositif de pompage 5 comporte au moins une pompe à vide primaire 7 présentant un corps de pompe à l'intérieur duquel deux rotors 10 sont susceptibles d'être entraînés en rotation par un moteur M1 d'entrainement de la pompe à vide primaire 7 (figures 2 et 3).

La pompe à vide primaire 7 est multiétagée, c'est-à-dire qu'elle comporte une pluralité d'étages de pompage T1, T2, T3, T4, T5, au moins trois, par exemple cinq, montés en série entre une aspiration et un refoulement de la pompe à vide primaire 7 et dans lesquels un gaz à pomper peut circuler.

Chaque étage de pompage T1-T5 comprend une entrée et une sortie respectives. Les étages de pompage successifs T1-T5 sont raccordés en série les uns à la suite des autres par des canalisations inter-étages respectives raccordant la sortie de l'étage de pompage qui précède à l'entrée de l'étage qui suit. L'entrée du premier étage de pompage T1 communique avec l'aspiration de la pompe à vide 7 et la sortie du dernier étage de pompage T5 communique avec le refoulement 6 de la pompe à vide 2.

Comme on peut mieux le voir sur la figure 3, chaque étage de pompage T1-T5 comprend au moins deux rotors 10 entraînés en rotation dans un stator 8 du corps de pompe. Les rotors 10 s'étendent dans les étages de pompage T1- T5. Les arbres des rotors 10 sont entraînés du côté de l'étage de refoulement T5 par le moteur M1 de la pompe à vide primaire 7 (figure 2).

Les rotors 10 présentent des lobes de profils identiques. Les rotors représentés sont de type « Roots » (section en forme de « huit » ou de « haricot »). Bien entendu, l'invention s'applique également à d'autres types de pompes à vide primaire multi-étagées de type sèche, telles que de type « Claw » ou de type à spirale ou à vis ou d'un autre principe similaire de pompe à vide volumétrique.

Les rotors 10 sont angulairement décalés et entrainés pour tourner de façon synchronisée en sens inverse dans le logement central 9 de chaque étage T1-T5. Lors de la rotation, le gaz aspiré depuis l'entrée est emprisonné dans le volume engendré par les rotors 10 et le stator 8, puis est entraîné par les rotors 10 vers l'étage suivant (le sens de circulation des gaz est illustré par les flèches G sur les figures 2 et 3).

La pompe à vide primaire 7 est dite « sèche » car en fonctionnement, les rotors 10 tournent à l'intérieur du stator 8 sans aucun contact mécanique avec le stator 8, ce qui permet l'absence totale d'huile dans les étages de pompage T1-T5.

La pression de refoulement de la pompe à vide primaire 7 est la pression atmosphérique.

Le dispositif de pompage 5 peut comporter une pompe à vide secondaire Roots 11 montée en série et en amont de la pompe à vide primaire 7 comme visible sur la figure 2.

La pompe à vide secondaire Roots 11 est, comme la pompe à vide primaire 7, une pompe à vide volumétrique, qui, à l'aide de rotors de type Roots, aspire, transfère puis refoule le gaz à pomper.

La pompe à vide secondaire Roots 11 comporte au moins un étage de pompage B1 dans lequel deux rotors sont entraînés en rotation par un moteur M2 de la pompe à vide secondaire Roots 11. La fréquence de rotation du moteur M2 est par exemple contrôlée entre 30Hz et 100Hz, telle qu'à 55Hz.

La pompe à vide secondaire Roots 11 se différencie principalement de la pompe à vide primaire 7 par des dimensions plus grandes, des tolérances de jeu plus grandes et par le fait que la pompe à vide secondaire Roots 11 ne refoule pas à la pression atmosphérique mais doit être utilisée en montage série en amont d'une pompe à vide primaire 7.

La pompe à vide primaire 7 comporte en outre un variateur de vitesse 12 configuré pour contrôler la vitesse de rotation du moteur M1 de la pompe à vide primaire 7. Le moteur M1 est par exemple un moteur asynchrone, par exemple ayant une puissance moteur de l'ordre de 5kW.

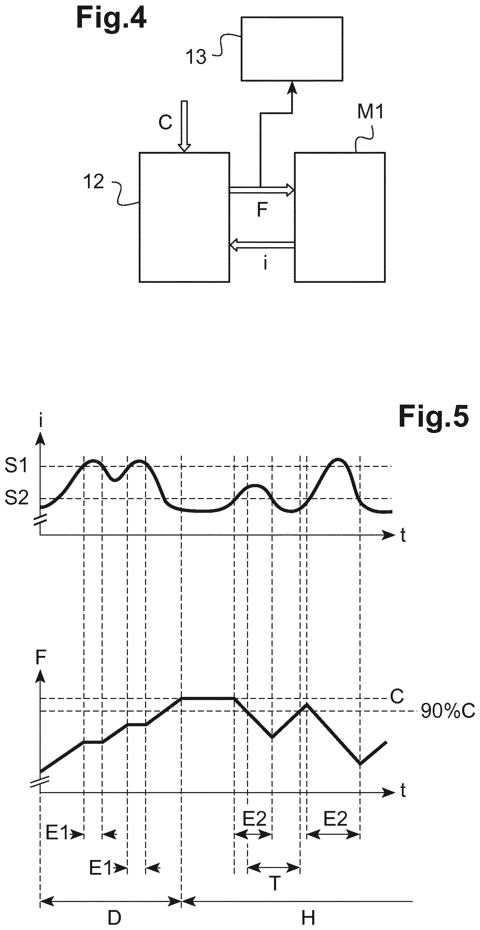

Le variateur de vitesse 12 est configuré d'une part, pour recevoir un premier paramètre d'entrée correspondant à une fréquence de consigne C et un second paramètre d'entrée correspondant à un courant moteur i et d'autre part, pour délivrer au moteur M1 un paramètre de sortie correspondant à une fréquence de commande F (figure 4).

La fréquence de consigne C peut être paramétrée par l'utilisateur, par exemple par modification d'un signal d'entrée analogique du variateur de vitesse 12 ou au moyen d'un bouton manuel de réglage du variateur de vitesse 12. La fréquence de consigne C est par exemple comprise entre 30Hz et 60Hz, telle que 60Hz.

Le courant moteur i est le courant consommé par le moteur M1. Le courant moteur i augmente lorsque la charge du moteur M1 augmente et diminue lorsque la charge du moteur M1 diminue.

Selon un exemple de réalisation, le variateur de vitesse 12 contrôle la fréquence de commande F en boucle ouverte, par exemple par Modulation de Largeur d'Impulsions (MLI ou PWM pour« Pulse Width Modulation » en anglais).

L'onduleur du variateur de vitesse 12 commande le moteur M1 par un train d'impulsions qui détermine à la fois la tension et la fréquence.

La commande en boucle ouverte n'utilise pas de capteurs pour mesurer la vitesse de rotation de l'arbre ou sa position angulaire. Cette configuration sans capteurs est économique et relativement simple à mettre en oeuvre.

Au démarrage de la pompe à vide primaire 7 (phase de démarrage D, figure 5), le variateur de vitesse 12 est commandé pour augmenter progressivement la fréquence de commande F pendant une durée de montée, par exemple en suivant une relation linéaire croissante ou suivant une succession de relations linéaires croissantes pouvant être préprogrammées, jusqu'à atteindre la fréquence de consigne C.

Puis, une fois la fréquence de consigne C atteinte, le variateur de vitesse 12 contrôle la fréquence de commande F pour qu'elle soit constante et égale à la fréquence de consigne C (fonctionnement stationnaire H).

Un seuil de courant d'accélération S1 peut être prévu pour protéger le variateur de vitesse 12 contre les surintensités lorsque la fréquence de commande F augmente. Une surintensité peut par exemple survenir si la durée de montée est trop courte en phase de démarrage D.

Lorsque le courant moteur i dépasse le seuil de courant d'accélération S1, le variateur de vitesse 12 bloque la montée en fréquence de commande F jusqu'à ce que le courant moteur i diminue et repasse en-dessous du seuil de courant d'accélération S1 (voir par exemple les phases de surcharges au démarrage E1 sur la figure 5).

Le seuil de courant d'accélération S1 peut être réglable.

Un seuil de courant de fonctionnement S2 est prévu pour protéger le variateur de vitesse 12 contre les surintensités dans le fonctionnement stationnaire H pour lequel le variateur de vitesse 12 contrôle la fréquence de commande F à la fréquence de consigne C.

Lorsque le courant moteur i dépasse le seuil de courant de fonctionnement S2, le variateur de vitesse 12 diminue la fréquence de commande F jusqu'à ce que le courant moteur i diminue et repasse en-dessous du seuil de courant de fonctionnement S2 (voir par exemple les phases de surcharge en fonctionnement E2 sur la figure 5). Cette situation de surcharge peut survenir par exemple au moment de la mise sous vide de la chambre de procédés 2 à pression atmosphérique.

Lorsque la valeur du courant moteur i est inférieure au seuil de courant de fonctionnement S2 moins quelques pourcents, le variateur de vitesse 12 augmente à nouveau la fréquence de commande F jusqu'à atteindre la fréquence de consigne C.

La diminution et l'augmentation de la fréquence de commande F, pilotées par le variateur de vitesse 12 en fonctionnement stationnaire H, peuvent être linéaires. Le seuil de courant de fonctionnement S2 peut être réglable. Il est par exemple inférieur au seuil de courant d'accélération S1.

Lorsque la différence entre le premier paramètre d'entrée correspondant à la fréquence de consigne C, et le paramètre de sortie correspondant à la fréquence de commande F, est égale à, ou dépasse 90% du premier paramètre d'entrée, sur une durée prolongée supérieure à une minute, une alerte ou une alarme est déclenchée. Il peut s'agir par exemple d'un grippage de la pompe à vide primaire 7 en phase de démarrage D, celle-ci n'arrivant pas à démarrer par exemple.

Le dispositif de pompage 5 comporte en outre une unité de surveillance 13 configurée pour surveiller un état de fonctionnement du dispositif de pompage 5 selon un procédé de surveillance décrit ci-après.

L'unité de surveillance 13 comporte un ou plusieurs microcontrôleurs ou ordinateurs, ayant des mémoires et programmes adaptés pour surveiller un état de fonctionnement du dispositif de pompage 5. L'unité de surveillance 13 peut être celle du variateur de vitesse 12 ou peut être un élément déporté, relié au variateur de vitesse 12.

L'unité de surveillance 13 surveille la fréquence de commande F envoyée au moteur M1 par le variateur de vitesse 12 au moins en fonctionnement stationnaire H, c'est-à-dire lorsque le variateur de vitesse 12 n'est pas en phase de démarrage D ou en phase d'arrêt. En fonctionnement stationnaire, la fréquence de consigne C est constante au moins pendant une durée supérieure ou égale à une durée prédéterminée T, telle que 3 secondes.

On détermine un état de fonctionnement nécessitant une intervention de maintenance de la pompe à vide primaire 7 lorsqu'en fonctionnement stationnaire H, la différence entre le premier paramètre d'entrée correspondant à la fréquence de consigne C et le paramètre de sortie correspondant à la fréquence de commande F, est égale à, ou dépasse 10% du premier paramètre d'entrée pendant une durée prédéterminée T supérieure à 3 secondes, telle que supérieure à 10 secondes, le premier paramètre d'entrée étant supérieur au paramètre de sortie. Autrement dit, l'état de fonctionnement nécessite une intervention si C - F ≥ 0,1*C, c'est-à-dire si F ≤ 0,9*C (figure 5).

Par exemple, une défaillance imminente de la pompe à vide primaire 7 est déterminée lorsque la fréquence de commande F envoyée par le variateur de vitesse 12 au moteur M1 est inférieure ou égale à 54Hz, pendant la durée prédéterminée T.

Selon un critère plus restrictif, on détermine un état de fonctionnement nécessitant une intervention de maintenance de la pompe à vide primaire 7 lorsqu'en fonctionnement stationnaire H, la différence entre le premier paramètre d'entrée et le paramètre de sortie est égale à, ou dépasse 4% du premier paramètre d'entrée pendant la durée prédéterminée T. Autrement dit, l'état de fonctionnement nécessite une intervention si C - F ≥ 0,04*C, c'est-à-dire si F ≤ 0,96*C, soit plus tôt que pour F ≤ 0,9*C.

Par exemple, une défaillance imminente de la pompe à vide primaire 7 est déterminée lorsque la fréquence de commande F envoyée par le variateur de vitesse 12 au moteur M1 est inférieure à 57,6Hz pendant la durée prédéterminée T.

La durée prédéterminée T peut être mesurée par un relais temporisé ou directement par l'unité de surveillance 13. La durée prédéterminée T peut être inférieure à 30 secondes.

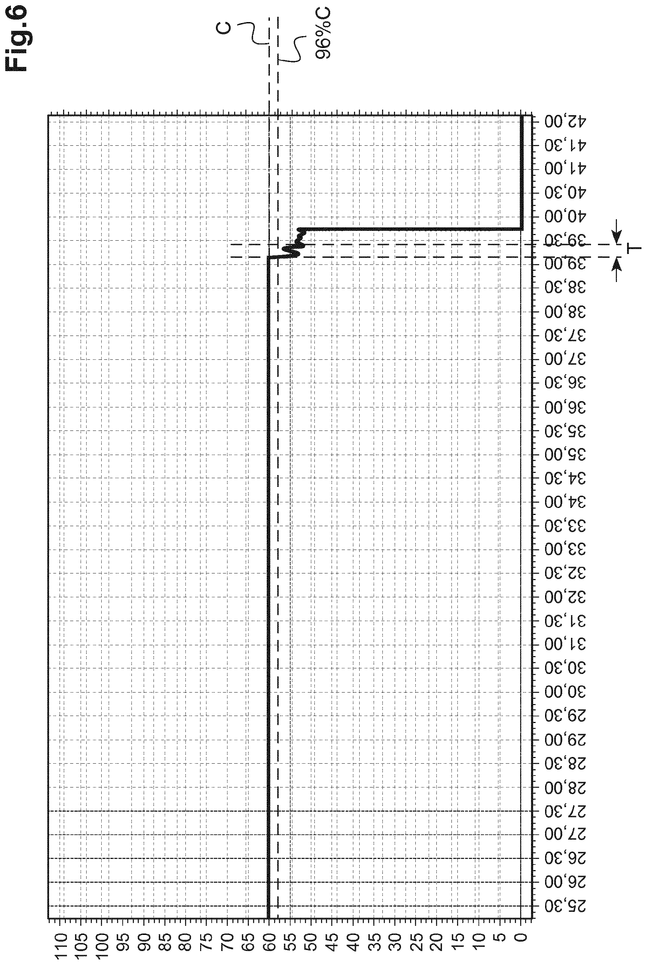

Ainsi, et comme on peut le voir sur l'exemple de la figure 6, on constate qu'une baisse de la fréquence de commande F de plus de 2,4 Hz pendant plus de 13 secondes conduit à la défaillance de la pompe à vide primaire 7 dans les quelques secondes qui suivent la fin de la durée prédéterminée T.

Cette détection d'une défaillance imminente du dispositif de pompage 5 permet de prédire, dans un délai de l'ordre de quelques secondes, entre une seconde et deux minutes et ici de l'ordre de 10 à 20 secondes, l'arrêt brutal du dispositif de pompage 5, ce qui laisse le temps d'isoler le dispositif de pompage 5 de la chambre de procédés 2 située en amont, et éventuellement d'une pompe à vide turbomoléculaire, et de couper l'arrivée des gaz.

Dans le cas d'un colmatage progressif de la pompe à vide primaire 7 que l'on cherche à diagnostiquer, la charge de la pompe à vide primaire 7 est fluctuante. De fait, la fréquence de commande F diminue et remonte alternativement sans passer au-dessous du seuil d'alerte ou d'alarme. Le variateur de vitesse 12 peut alors rattraper les baisses de fréquence provoquées par les surintensités pendant quelques secondes ou quelques minutes. Le procédé de surveillance permet ainsi de détecter cette situation afin de permettre à l'utilisateur de pouvoir prendre des dispositions et protéger la chambre de procédés 2 avant que le colmatage ne soit trop important.

L'unité de surveillance 13 peut par exemple faire basculer une sortie logique lorsqu'une défaillance imminente est déterminée ou peut faire basculer un relais connecté en série avec les relais d'alerte et d'alarme de la pompe à vide primaire 7. Ces relais peuvent servir à fermer des vannes d'isolation agencées entre la chambre de procédés 2 et le dispositif de pompage 5 et/ou à couper l'arrivée des gaz dans la chambre de procédés 2.

Le procédé de surveillance permet donc d'identifier de manière simple et robuste, un comportement anormal du dispositif de pompage 5 d'une part, sans aucune indication du procédé de traitement ayant lieu dans la chambre de procédés 2 et d'autre part, sans être impacté par des perturbations ou modifications du procédé de traitement.

## Revendications

1. Procédé de surveillance d'un état de fonctionnement d'un dispositif de pompage (5) raccordé à une chambre de procédés (2) en vue de déterminer un état de fonctionnement défaillant du dispositif de pompage (5), le dispositif de pompage (5) comprenant au moins une pompe à vide primaire (7) comprenant :
- un moteur (M1) d'entrainement de la pompe à vide primaire (7), et
- un variateur de vitesse (12) configuré pour contrôler la vitesse de rotation du moteur (M1) et configuré d'une part, pour recevoir un premier paramètre d'entrée correspondant à une fréquence de consigne (C) et un second paramètre d'entrée correspondant au courant moteur (i) consommé par le moteur (M1) et d'autre part, pour délivrer au moteur (M1) un paramètre de sortie correspondant à une fréquence de commande (F) en fonction du premier et du second paramètre d'entrée,
**caractérisé en ce qu'**on détermine un état de fonctionnement défaillant lorsqu'en fonctionnement stationnaire (H), la différence entre le premier paramètre d'entrée et le paramètre de sortie est égale ou dépasse 10% du premier paramètre d'entrée pendant une durée prédéterminée (T) supérieure à 3 secondes, état de fonctionnement défaillant dans lequel on ferme une vanne d'isolation agencée entre la chambre de procédés (2) et le dispositif de pompage (5) et/ou on coupe l'arrivée des gaz dans la chambre de procédés (2).

2. Procédé de surveillance d'un état de fonctionnement d'un dispositif de pompage (5) selon la revendication précédente, dans lequel on détermine un état de fonctionnement défaillant lorsqu'en fonctionnement stationnaire (H), la différence entre le premier paramètre d'entrée et le paramètre de sortie est égale ou dépasse 4% du premier paramètre d'entrée pendant la durée prédéterminée (T).

3. Procédé de surveillance d'un état de fonctionnement d'un dispositif de pompage (5) selon l'une des revendications précédentes, dans lequel la durée prédéterminée (T) est supérieure à 10 secondes.

4. Procédé de surveillance d'un état de fonctionnement d'un dispositif de pompage (5) selon l'une des revendications précédentes, dans lequel la durée prédéterminée (T) est inférieure à 30 secondes.

5. Procédé de surveillance d'un état de fonctionnement d'un dispositif de pompage (5) selon l'une des revendications précédentes, **caractérisé en ce qu'**au démarrage de la pompe à vide primaire (7), le variateur de vitesse (12) est commandé pour augmenter progressivement la fréquence de commande (F) jusqu'à atteindre la fréquence de consigne (C).

6. Procédé de surveillance d'un état de fonctionnement d'un dispositif de pompage (5) selon l'une des revendications précédentes, **caractérisé en ce qu'**en fonctionnement stationnaire (H), la fréquence de consigne (C) est constante au moins pendant une durée supérieure ou égale à la durée prédéterminée (T).

7. Procédé de surveillance d'un état de fonctionnement d'un dispositif de pompage (5) selon l'une des revendications précédentes, **caractérisé en ce que** lorsque la fréquence de commande (F) augmente et que le courant moteur (i) dépasse un seuil de courant d'accélération (S1), le variateur de vitesse (12) bloque la montée de la fréquence de commande (F).

8. Procédé de surveillance d'un état de fonctionnement d'un dispositif de pompage (5) selon l'une des revendications précédentes, **caractérisé en ce que** lorsque le variateur de vitesse (12) est en fonctionnement stationnaire (H) et que le courant moteur (i) dépasse un seuil de courant de fonctionnement (S2), le variateur de vitesse (12) diminue la fréquence de commande (F).

9. Procédé de surveillance d'un état de fonctionnement d'un dispositif de pompage (5) selon l'une des revendications précédentes, **caractérisé en ce que** lorsque la différence entre le premier paramètre d'entrée et le paramètre de sortie est égale ou dépasse 90% du premier paramètre d'entrée pendant une durée prédéterminée (T) supérieure à une minute, une alerte ou une alarme est déclenchée.

10. Dispositif de pompage (5) comportant au moins une pompe à vide primaire (7) comportant :
- un moteur (M1) d'entrainement de la pompe à vide primaire (7), et
- un variateur de vitesse (12) configuré pour contrôler la vitesse de rotation du moteur (M1) et configuré d'une part, pour recevoir un premier paramètre d'entrée correspondant à une fréquence de consigne (C) et un second paramètre d'entrée correspondant à un courant moteur (i) et d'autre part, pour délivrer au moteur (M1) un paramètre de sortie correspondant à une fréquence de commande (F),
**caractérisé en ce que** le dispositif de pompage (5) comporte une unité de surveillance (13) configurée pour surveiller un état de fonctionnement d'un dispositif de pompage (5) selon un procédé de surveillance d'un état de fonctionnement d'un dispositif de pompage (5) de l'une des revendications précédentes.

11. Dispositif de pompage (5) selon la revendication précédente, **caractérisé en ce qu'**il comporte une pompe à vide secondaire Roots (11) montée en série et en amont de la pompe à vide primaire (7).

12. Installation (1) comportant une chambre de procédés (2) reliée par une canalisation (3) à l'aspiration d'un dispositif de pompage (5) selon l'une des revendications 10 ou 11.

## Patentansprüche

1. Verfahren zur Überwachung eines Betriebszustands einer an einen Verfahrensraum (2) angeschlossenen Pumpvorrichtung (5), um einen Fehlbetriebszustand der Pumpvorrichtung (5) zu ermitteln, wobei die Pumpvorrichtung (5) mindestens eine primäre Vakuumpumpe (7) enthält, die enthält:
- einen Motor (M1) zum Antrieb der primären Vakuumpumpe (7), und
- einen Drehzahlregler (12), der konfiguriert ist, die Drehgeschwindigkeit des Motors (M1) zu kontrollieren, und einerseits konfiguriert ist, einen ersten Eingangsparameter entsprechend einer Sollfrequenz (C) und einen zweiten Eingangsparameter entsprechend dem vom Motor (M1) verbrauchten Motorstrom (i) zu empfangen, und andererseits dem Motor (M1) einen Ausgangsparameter entsprechend einer Steuerfrequenz (F) abhängig vom ersten und vom zweiten Eingangsparameter zu liefern,
**dadurch gekennzeichnet, dass** ein Fehlbetriebszustand ermittelt wird, wenn im stationären Betrieb (H) die Differenz zwischen dem ersten Eingangsparameter und dem Ausgangsparameter während einer vorbestimmten Dauer (T) von mehr als 3 Sekunden gleich 10% des ersten Eingangsparameters ist oder 10% überschreitet, Fehlbetriebszustand, bei dem ein zwischen dem Verfahrensraum (2) und der Pumpvorrichtung (5) angeordnetes Absperrventil geschlossen und/oder die Gaszufuhr in den Verfahrensraum (2) unterbrochen wird.

2. Verfahren zur Überwachung eines Betriebszustands einer Pumpvorrichtung (5) nach dem vorhergehenden Anspruch, wobei ein Fehlbetriebszustand ermittelt wird, wenn im stationären Betrieb (H) die Differenz zwischen dem ersten Eingangsparameter und dem Ausgangsparameter während der vorbestimmten Dauer (T) gleich 4% des ersten Eingangsparameters ist oder 4% überschreitet.

3. Verfahren zur Überwachung eines Betriebszustands einer Pumpvorrichtung (5) nach einem der vorhergehenden Ansprüche, wobei die vorbestimmte Dauer (T) mehr als 10 Sekunden beträgt.

4. Verfahren zur Überwachung eines Betriebszustands einer Pumpvorrichtung (5) nach einem der vorhergehenden Ansprüche, wobei die vorbestimmte Dauer (T) weniger als 30 Sekunden beträgt.

5. Verfahren zur Überwachung eines Betriebszustands einer Pumpvorrichtung (5) nach einem der vorhergehenden Ansprüche, **dadurch gekennzeichnet, dass** beim Start der primären Vakuumpumpe (7) der Drehzahlregler (12) gesteuert wird, um die Steuerfrequenz (F) progressiv zu erhöhen, bis die Sollfrequenz (C) erreicht ist.

6. Verfahren zur Überwachung eines Betriebszustands einer Pumpvorrichtung (5) nach einem der vorhergehenden Ansprüche, **dadurch gekennzeichnet, dass** im stationären Betrieb (H) die Sollfrequenz (C) mindestens während einer Dauer länger als die oder gleich der vorbestimmten Dauer (T) konstant ist.

7. Verfahren zur Überwachung eines Betriebszustands einer Pumpvorrichtung (5) nach einem der vorhergehenden Ansprüche, **dadurch gekennzeichnet, dass**, wenn die Steuerfrequenz (F) zunimmt und der Motorstrom (i) eine Beschleunigungsstromschwelle (S1) überschreitet, der Drehzahlregler (12) den Anstieg der Steuerfrequenz (F) blockiert.

8. Verfahren zur Überwachung eines Betriebszustands einer Pumpvorrichtung (5) nach einem der vorhergehenden Ansprüche, **dadurch gekennzeichnet, dass**, wenn der Drehzahlregler (12) im stationären Betrieb (H) ist und der Motorstrom (i) eine Betriebsstromschwelle (S2) überschreitet, der Drehzahlregler (12) die Steuerfrequenz (F) verringert.

9. Verfahren zur Überwachung eines Betriebszustands einer Pumpvorrichtung (5) nach einem der vorhergehenden Ansprüche, **dadurch gekennzeichnet, dass**, wenn die Differenz zwischen dem ersten Eingangsparameter und dem Ausgangsparameter während einer vorbestimmten Dauer (T) von mehr als einer Minute gleich 90% des ersten Eingangsparameters ist oder 90% überschreitet, eine Warnung oder ein Alarm ausgelöst wird.

10. Pumpvorrichtung (5), die mindestens eine primäre Vakuumpumpe (7) aufweist, die aufweist:
- einen Motor (M1) zum Antrieb der primären Vakuumpumpe (7), und
- einen Drehzahlregler (12), der konfiguriert ist, die Drehgeschwindigkeit des Motors (M1) zu kontrollieren, und einerseits konfiguriert ist, einen ersten Eingangsparameter entsprechend einer Sollfrequenz (C) und einen zweiten Eingangsparameter entsprechend einem Motorstrom (i) zu empfangen, und andererseits dem Motor (M1) einen Ausgangsparameter entsprechend einer Steuerfrequenz (F) zu liefern,
**dadurch gekennzeichnet, dass** die Pumpvorrichtung (5) eine Überwachungseinheit (13) aufweist, die konfiguriert ist, einen Betriebszustand einer Pumpvorrichtung (5) gemäß einem Verfahren zur Überwachung eines Betriebszustands einer Pumpvorrichtung (5) nach einem der vorhergehenden Ansprüche zu überwachen.

11. Pumpvorrichtung (5) nach dem vorhergehenden Anspruch, **dadurch gekennzeichnet**, sie eine sekundäre Roots-Vakuumpumpe (11) aufweist, die stromaufwärts vor der primären Vakuumpumpe (7) in Reihe geschaltet ist.

12. Anlage (1), die einen Verfahrensraum (2) aufweist, der durch eine Rohrleitung (3) mit der Ansaugseite einer Pumpvorrichtung (5) nach einem der Ansprüche 10 oder 11 verbunden ist.

## Claims

1. Method for monitoring an operating state of a pumping device (5) connected to a process chamber (2) in order to determine a state of defective operation of the pumping device (5), the pumping device (5) comprising at least one rough-vacuum pump (7) comprising:
- a motor (M1) for driving the rough-vacuum pump (7), and
- a variable speed drive (12) configured to control the rotation speed of the motor (M1) and configured on the one hand to receive a first input parameter corresponding to a setpoint frequency (C) and a second input parameter corresponding to the motor current (i) drawn by the motor (M1) and on the other hand to deliver to the motor (M1) an output parameter corresponding to a control frequency (F) dependent on the first and second input parameters,
**characterized in that** a state of defective operation is determined when, in steady-state operation (H), the difference between the first input parameter and the output parameter is equal to or exceeds 10% of the first input parameter for a predetermined time (T) greater than 3 seconds, in which state of defective operation an isolating valve arranged between the process chamber (2) and the pumping device (5) is closed and/or the arrival of the gases in the process chamber (2) is shut off.

2. Method for monitoring an operating state of a pumping device (5) according to the preceding claim, in which a state of defective operation is determined when, in steady-state operation (H), the difference between the first input parameter and the output parameter is equal to or exceeds 4% of the first input parameter for the predetermined time (T).

3. Method for monitoring an operating state of a pumping device (5) according to either of the preceding claims, in which the predetermined time (T) is greater than 10 seconds.

4. Method for monitoring an operating state of a pumping device (5) according to one of the preceding claims, in which the predetermined time (T) is less than 30 seconds.

5. Method for monitoring an operating state of a pumping device (5) according to one of the preceding claims, **characterized in that**, on starting the rough-vacuum pump (7), the variable speed drive (12) is commanded to increase the control frequency (F) progressively until the setpoint frequency (C) is reached.

6. Method for monitoring an operating state of a pumping device (5) according to one of the preceding claims, **characterized in that**, in steady-state operation (H), the setpoint frequency (C) is constant at least for a time greater than or equal to the predetermined time (T).

7. Method for monitoring an operating state of a pumping device (5) according to one of the preceding claims, **characterized in that**, when the control frequency (F) increases and the motor current (i) exceeds an acceleration current threshold (S1), the variable speed drive (12) blocks the increase in the control frequency (F).

8. Method for monitoring an operating state of a pumping device (5) according to one of the preceding claims, **characterized in that**, when the variable speed drive (12) is in steady-state operation (H) and the motor current (i) exceeds an operating current threshold (S2), the variable speed drive (12) reduces the control frequency (F).

9. Method for monitoring an operating state of a pumping device (5) according to one of the preceding claims, **characterized in that**, when the difference between the first input parameter and the output parameter is equal to or exceeds 90% of the first input parameter for a predetermined time (T) greater than one minute, an alert or an alarm is triggered.

10. Pumping device (5) including at least one rough-vacuum pump (7) including:
- a motor (M1) for driving the rough-vacuum pump (7), and
- a variable speed drive (12) configured to control the rotation speed of the motor (M1) and configured on the one hand to receive a first input parameter corresponding to a setpoint frequency (C) and a second input parameter corresponding to a motor current (i) and on the other hand to deliver to the motor (M1) an output parameter corresponding to a control frequency (F),
**characterized in that** the pumping device (5) includes a surveillance unit (13) configured for monitoring an operating state of a pumping device (5) in accordance with a method for monitoring an operating state of a pumping device (5) according to one of the preceding claims.

11. Pumping device (5) according to the preceding claim, **characterized in that** it includes a Roots high-vacuum pump (11) mounted in series with and on the upstream side of the rough-vacuum pump (7).

12. Installation (1) including a process chamber (2) connected by a pipe (3) to the intake of a pumping device (5) according to either of Claims 10 and 11.
